(19) Europäisches Patentamt / European Patent Office / Office européen des brevets

(11) **EP 3 374 134 B1**

(12) **EUROPÄISCHE PATENTSCHRIFT**

(45) Veröffentlichungstag und Bekanntmachung des Hinweises auf die Patenterteilung:
**06.12.2023   Patentblatt 2023/49**

(21) Anmeldenummer: **16793753.1**

(22) Anmeldetag: **04.11.2016**

(51) Internationale Patentklassifikation (IPC):
**B25J 9/16** *(2006.01)*      **G05B 19/418** *(2006.01)*

(52) Gemeinsame Patentklassifikation (CPC):
**B25J 9/1692; G05B 19/4182;** G05B 2219/39022;
G05B 2219/39024; G05B 2219/39102;
G05B 2219/39401; Y02P 90/02

(86) Internationale Anmeldenummer:
**PCT/EP2016/001841**

(87) Internationale Veröffentlichungsnummer:
**WO 2017/080640 (18.05.2017 Gazette 2017/20)**

(54) **KALIBRIEREN EINES SYSTEMS MIT EINEM FÖRDERMITTEL UND WENIGSTENS EINEM ROBOTER**

CALIBRATING A SYSTEM WITH A CONVEYING MEANS AND AT LEAST ONE ROBOT

ÉTALONNAGE D'UN SYSTÈME COMPRENANT UN MOYEN DE TRANSPORT ET AU MOINS UN ROBOT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.11.2015   DE 102015014485**

(43) Veröffentlichungstag der Anmeldung:
**19.09.2018   Patentblatt 2018/38**

(73) Patentinhaber: **KUKA Deutschland GmbH**
**86165 Augsburg (DE)**

(72) Erfinder:
• **PURRUCKER, Thomas**
  **80689 München (DE)**
• **MILLER, Robert**
  **86937 Scheuring (DE)**
• **MITTMANN, Ralf**
  **86415 Mering (DE)**
• **SAGNOTTI, Daniele**
  **86153 Augsburg (DE)**
• **GERSTMEIER, Manuela**
  **86447 Aindling (DE)**
• **EICHNER, Benno**
  **82296 Schöngeising (DE)**
• **CLAIR, Stephan**
  **89415 Lauingen (DE)**
• **LÜCKERT, Felix**
  **86165 Augsburg (DE)**
• **HAGER, Markus**
  **86152 Augsburg (DE)**
• **LINDNER, Maximilian**
  **86438 Kissing (DE)**

(74) Vertreter: **Schlotter, Alexander Carolus Paul**
**Wallinger Ricker Schlotter Tostmann**
**Patent- und Rechtsanwälte Partnerschaft mbB**
**Zweibrückenstrasse 5-7**
**80331 München (DE)**

(56) Entgegenhaltungen:
EP-A2- 1 375 083          DE-A1- 10 150 225
DE-A1-102013 113 165    US-A1- 2011 022 216
US-A1- 2011 022 216      US-A1- 2012 229 620

• R E Deakin: "3D Coordinate Transformations", , 31. Dezember 1998 (1998-12-31), XP055339901, Melbourne, Australia Gefunden im Internet: URL:https://www.researchgate.net/profile/R od_Deakin/publication/228608056_3-D_Coordi nate_Transformations/links/00b7d51d4a7fa8d 8d8000000/3-D-Coordinate-Transformations.p df [gefunden am 2017-01-27]

**Beschreibung**

Die vorliegende Erfindung betrifft ein Verfahren zum Kalibrieren eines Systems mit einem Fördermittel und einem oder mehreren Robotern sowie ein solches System mit einer Steuerung und ein Computerprogrammprodukt zur Durchführung des Verfahrens.

Aus der DE 101 62 967 B4 ist ein System mit mehreren Robotern zur Interaktion mit Bauteilen bekannt, die durch ein Fördermittel transportiert werden.

Für jeden Roboter werden jeweils ein Fördermittelkoordinatensystem, dessen x-Achse parallel zur Bewegungsrichtung des Fördermittels und dessen y-Achse ebenfalls in der Transportebene des Fördermittels liegt, sowie eine Transformation in ein Roboterkoordinatensystem bereitgestellt.

Sollen Aktionen in einem bauteilfesten Koordinatensystem definiert werden, wird für jedes bauteilfestes Koordinatensystem zusätzlich eine Transformation zwischen diesem und dem jeweiligen Fördermittelkoordinatensystem benötigt.

Zum Einmessen eines Koordinatensystems muss regelmäßig die Position von wenigstens drei Messpunkten ermittelt werden, beispielsweise des Ursprungs des Koordinatensystems, eines weiteren Punktes auf einer Koordinatenachse und eines weiteren Punktes in einer Koordinatenachsenebene.

Entsprechend müssen bei m Robotern und n unterschiedlichen bauteilfesten Koordinatensystemen bisher $6 \times m \times n$ Positionen ermittelt werden, um das System zu kalibrieren.

Der Austausch eines Roboters oder eine Modifikation eines Transportpositionsermittelungsmittels, durch das eine (Synchronisierungs)Position eines bauteilfesten Koordinatensystems erfasst wird, erfordern entsprechend aufwändige (Re)Kalibrierungen.

Die DE 10 2013 113 165 A1 betrifft ein System zur Kalibrierung eines Mehrfachrobotersystems umfassend eine Robotersimulationsvorrichtung mit einem darin eingerichteten Prozessor zur Erzeugung eines Simulationsarbeitsplatzes einer Bedienung eines echten Roboterarbeitsplatzes, wobei die Robotersimulationsvorrichtung so ausgestaltet ist, um mit einer die Roboter des echten Roboterarbeitsplatzes steuernden Robotersteuerung zu kommunizieren, der Simulationsarbeitsplatz auf der Basis einer vorgegebenen Anordnung des echten Roboterarbeitsplatzes erzeugt wird, das System des Weiteren ein Softwareprogramm umfasst, das von der Robotersimulationsvorrichtung und/oder der Robotersteuerung ausgeführt wird, um eine Versetzung der Bauteilnachführung zwischen dem Simulationsarbeitsplatz und dem echten Roboterarbeitsplatz zur Steuerung der Roboter zu berechnen.

Die US 2011/022216 A1 betrifft ein Verfahren und eine Vorrichtung zur Kalibrierung eines Industrieroboterystems, das mindestens einen Roboter mit einem Roboterkoordinatensystem und einen Positionierer mit einem Positioniererkoordinatensystem umfasst, das geeignet ist, ein Werkstück zu halten und seine Ausrichtung zu ändern, indem es um eine Drehachse gedreht wird.

Der Artikel R E Deakin, "3D COORDINATE Transformations" beschreibt dreidimensionale Koordinatentransformationen.

Die EP 1 375 083 A2 betrifft ein Verfahren zur Bestimmung der Ausrichtung einer Roboterbewegungsachse in einem ersten Roboterkoordinatensystem, wobei die Bewegungsachse erste und zweite Orte verbindet.

Nach der DE 101 50 225 A1 ist auf ein Werkstück ein Werkstück-Koordinatensystem und auf einen Roboter ein Roboter-Koordinatensystem bezogen, welches gegenüber einem gegebenen Referenz-Koordinatensystem eine Abweichung aufweist, die durch Koordinatenvergleich von mindestens drei Aufpunkten bezüglich des Roboter-Koordinatensystems einerseits und bezüglich des Referenz-Koordinatensystems andererseits ermittelt wird.

Die US 2012/229620 A1 betrifft eine Bildverarbeitungsvorrichtung, die eine Verwaltungseinheit zum Verwalten von Positionsinformationen eines Werkstücks auf der Fördervorrichtung, eine Erhalteeinheit, eine Aktualisierungseinheit, eine Identifizierungseinheit, um ein neu in den Bilderfassungsbereich einer Bilderfassungseinheit befördertes Werkstück zu identifizieren, und eine Übertragungseinheit umfasst.

Aufgabe der vorliegenden Erfindung ist es, das Kalibrieren eines Systems mit wenigstens einem Roboter und einem Fördermittel zu verbessern.

Diese Aufgabe wird durch ein Verfahren mit den Merkmalen des Anspruchs 1 gelöst. Ansprüche 10, 11 stellen ein System mit einer Steuerung und ein Computerprogrammprodukt zur Durchführung eines hier beschriebenen Verfahrens unter Schutz. Die Unteransprüche betreffen vorteilhafte Weiterbildungen.

In einer Ausführung der vorliegenden Erfindung weist ein System ein Fördermittel zum Transportieren von Bauteilen und einen oder mehrere Roboter auf, von denen ohne Beschränkung der Allgemeinheit zu Referenzzwecken einer nachfolgend als erster Roboter bezeichnet ist.

Das Fördermittel ist in einer Ausführung ein lineares Fördermittel mit einer wenigstens stückweise geraden, insbesondere einheitlichen, Transportrichtung bzw. -bewegung, es kann insbesondere wenigstens ein Förderband aufweisen, insbesondere sein. Gleichermaßen kann das Fördermittel auch gekrümmte und/oder gegeneinander versetzte und/oder geneigte Transportrichtungen aufweisen.

Der erste Roboter kann in einer Ausführung ein in Transportrichtung erster Roboter sein.

Ein oder mehrere Roboter des Systems weisen in einer Ausführung jeweils wenigstens drei, insbesondere wenigstens sechs, insbesondere wenigstens sieben, aktuierte, insbesondere motorisierte, Bewegungs-, insbesondere Dreh- und/oder Linearachsen auf.

Das System weist in einer Ausführung eine Steuerung zum Steuern der Roboter auf. Die Steuerung kann insbesondere eine oder mehrere Robotersteuerungen zum Steuern je eines oder mehrerer Roboter des Systems aufweisen, die in einer Weiterbildung miteinander kommunizieren bzw. Daten austauschen (können) bzw. hierzu eingerichtet, insbesondere daten(übertragungs)technisch, verbunden sind.

In einer Ausführung handhaben und/oder bearbeiten Roboter des Systems durch das Fördermittel transportierte Bauteile bzw. sind hierzu, insbesondere hard- und/oder software-, insbesondere programmtechnisch, eingerichtet, insbesondere ihre (Roboter)Steuerung(en).

In einer Ausführung ist die Handhabung bzw. Bearbeitung mit der Bewegung des Fördermittels synchronisiert. Dies kann insbesondere dadurch erfolgen, dass eine Bewegung des bzw. der Roboter(s) auf Basis eines bauteilfesten Koordinatensystems vorgegeben ist bzw. wird, in dem zum Beispiel Griff- oder Bearbeitungspositionen, insbesondere -bahnen, vorgegeben sind bzw. werden, wobei diese Positionen auf Basis einer Transportposition bzw. eines Vorschubs des Fördermittels gegenüber einer Synchronisierungsposition, einer kalibrierten Transformation zwischen dem bauteil- und einem fördermittelbasisfesten Koordinatensystem und einer kalibrierten Transformation zwischen dem fördermittelbasis- und einem roboterfesten, insbesondere roboterbasisfesten, Koordinatensystem von der Steuerung angefahren bzw. abgearbeitet werden.

Ein fördermittelbasisfestes Koordinatensystem ist, wie bereits aus dem Namen ersichtlich, bzgl. einer (umgebungs- bzw. relativ zum Roboter festen) Basis des Fördermittels (orts)fest, wobei eine Transportebene, beispielsweise ein Förderband, des Fördermittels, und damit auch durch das Fördermittel transportierte Messpunktsysteme, insbesondere Bauteile, sich relativ zu der Basis des Fördermittels bzw. diesem fördermittelbasisfesten Koordinatensystem bewegen, vorzugsweise in einer Koordinatenebene entlang einer Koordinatenrichtung bzw. -achse des Koordinatensystems. Verändert sich somit eine Position und/oder Orientierung zwischen Roboter(basis) und Fördermittel(basis), ändert sich entsprechend auch eine Transformation zwischen fördermittelbasis- und roboterfestem Koordinatensystem.

Ein Verfahren zum Kalibrieren des Systems umfasst in einer Ausführung den Schritt:

- Ermitteln der Positionen von wenigstens, insbesondere genau, drei Messpunkten eines durch das Fördermittel transportierten ersten Messpunktsystems, insbesondere Bauteils, in einer Transportposition mittels des ersten Roboters.

Dies kann insbesondere durch Antasten der Messpunkte mittels des Roboters, insbesondere eines robotergeführten Messwerkzeugs, erfolgen. Gleichermaßen können beispielsweise durch Erfassen, insbesondere Abfahren, einer vorgegebenen Geraden (wenigstens) zwei Messpunktpositionen, durch Erfassen, insbesondere Abfahren, einer vorgegebenen Ebene mittels des Roboters (wenigstens) drei Messpunktpositionen ermittelt werden.

Nach einem Aspekt der vorliegenden Erfindung umfasst das Verfahren zusätzlich den Schritt:

- Ermitteln der Position von wenigstens, insbesondere genau, einem dieser Messpunkte in einer anderen Transportposition des Fördermittels bzw. durch das Fördermittel transportierten Messpunktsystems, insbesondere Bauteils, mittels des ersten Roboters.

Hierdurch kann in einer Ausführung vorteilhaft sowohl ein fördermittelbasisfestes als auch ein messpunktsystem-, insbesondere bauteilfestes Koordinatensystem, insbesondere sowohl eine Transformation zwischen einem roboterfesten Koordinatensystem und dem fördermittelbasisfesten Koordinatensystem als auch eine Transformation zwischen dem fördermittelbasisfesten und dem messpunktsystem-, insbesondere bauteilfesten Koordinatensystem mit nur wenigen, insbesondere bereits mit vier, Messungen bzw. Positionsermittlungen ermittelt werden. Werden mehrere Messungen bzw. Positionsermittlungen durchgeführt, kann, insbesondere durch Mittelung, die Präzision der Kalibrierung verbessert werden.

Durch die drei Messpunktpositionen in der einen Transportposition kann bereits ein messpunktsystem-, insbesondere bauteilfestes Koordinatensystem Weines durch das Fördermittel (in die Transportposition) transportierten Messpunktsystems, insbesondere Bauteils, W eindeutig ermittelt werden.

In einer Ausführung kann ein Ursprung dieses messpunktsystem-, insbesondere bauteilfesten Koordinatensystems in einer der drei Messpunktpositionen liegen, eine Koordinatenachse des Koordinatensystems durch diese und eine weitere der drei Messpunktpositionen verlaufen und eine weitere Koordinatenachse des Koordinatensystems ebenfalls in einer durch die drei Messpunktpositionen definierten Ebene liegen.

In einer Weiterbildung kann der Ursprung entgegen der Transportrichtung des Fördermittels in eine Synchronisierungsposition verschoben werden bzw. sein, ab der bzw. von der aus ein Transportpositionsermittelungsmittel eine Transportposition des Messpunktsystems, insbesondere Bauteils, ermittelt, insbesondere ein Synchronisierungsschalter ausgelöst wird.

Auf Basis der Position eines dieser drei Messpunkte in der einen und der anderen Transportposition kann eine Transportrichtung des Fördermittels ermittelt werden, auf Basis der Position eines anderen dieser drei Messpunkte in der einen Transportposition eine Transportebene des Fördermittels, und damit ein fördermittelbasisfestes Koordinatensystem **C**.

In einer Ausführung kann eine Koordinatenachse eines fördermittelbasisfesten Koordinatensystems **C** durch die Positionen des einen Messpunkts in den beiden Transportpositionen verlaufen, eine weitere Koordinatenachse dieses Koordinatensystems in der Ebene liegen, in der eine weitere der Messpunktpositionen liegt. Der Ursprung des fördermittelbasisfesten Koordinatensystems kann in einer Ausführung in einer der Positionen des einen Messpunkts liegen.

In einer Ausführung wird eine Transformation $T_{R1, C1}$ zwischen einem fördermittelbasisfesten Koordinatensystem **C1** und einem roboterfesten Koordinatensystem **R1** des ersten Roboters entsprechend auf Basis von wenigstens, insbesondere genau, drei der vier mittels des ersten Roboters ermittelten Positionen ermittelt.

Dabei kann eine Transformation $T_{A, B}$ zwischen einem Koordinatensystem **A** und einem Koordinatensystem **B** im Sinne der vorliegenden Erfindung allgemein gleichermaßen die Transformation von dem Koordinatensystem **A** in das Koordinatensystem **B** als auch von dem Koordinatensystem **B** in das Koordinatensystem **A** bezeichnen, da die eine aus der jeweils anderen ermittelt werden kann.

Eine Transformation im Sinne der vorliegenden Erfindung vermittelt insbesondere die Beschreibung eines Ortsvektors in den beiden Koordinatensystemen, sie kann somit die Verdrehung und Verschiebung der beiden Koordinatensysteme gegeneinander beschreiben bzw. hiervon abhängen, und beispielsweise mittels Denavit-Hartenberg-Parametern, Quaternionen, einer Drehmatrix und eines Verschiebevektors oder dergleichen parametriert sein bzw. werden.

Alternativ oder vorteilhafterweise zusätzlich wird in einer Ausführung entsprechend (auch) eine Transformation $T_{C1, W11}$ zwischen einem messpunktsystem-, insbesondere bauteilfesten Koordinatensystem **W11** des ersten Messpunktsystems, insbesondere Bauteils, und des ersten Roboters und dem fördermittelbasisfesten Koordinatensystem **C1** des ersten Roboters auf Basis wenigstens, insbesondere genau, drei der vier mittels des ersten Roboters ermittelten Positionen ermittelt. Insbesondere kann aus den drei Messpunktpositionen in der einen Transportposition, insbesondere unter Verschiebung entgegen der Transportrichtung in die Synchronisierungsposition, ab der die Transportpositionen ermittelt bzw. gemessen werden, das messpunktsystem-, insbesondere bauteilfeste Koordinatensystem **W11** im roboterfesten Koordinatensystem **R1** des ersten Roboters, hieraus die Transformation $T_{R1, W11}$ und daraus die Transformation $T_{C1, W11} = T_{R1, W11} (T_{R1, C1})^{-1}$ ermittelt werden, insbesondere durch die (Roboter)Steuerung des ersten Roboters.

Nach einem weiteren Aspekt der vorliegenden Erfindung, der vorteilhafterweise mit dem vorgenannten Aspekt kombiniert sein kann, umfasst das Verfahren den Schritt:

- (jeweils) Ermitteln der Positionen von wenigstens, insbesondere genau, zwei Messpunkten des ersten Messpunktsystems, insbesondere Bauteils, in einer Transportposition und der Position von wenigstens, insbesondere genau, einem weiteren Messpunkt in dieser Transportposition oder von wenigstens, insbesondere genau, einem dieser Messpunkte in einer anderen Transportposition mittels eines oder mehrerer zweiter Roboter des Systems.

Die Messpunkte sind in einer Ausführung dieselben Messpunkte, deren Positionen bereits mittels des ersten Roboters ermittelt wurden.

Durch die mittels des bzw. der zweiten Roboter(s) ermittelten Messpunktpositionen des Messpunktsystems, insbesondere Bauteils, in einer bzw. zwei bekannten Transportpositionen kann in einer Ausführung vorteilhaft jeweils ein fördermittelbasisfestes Koordinatensystem **C2** des zweiten Roboters ermittelt bzw. definiert werden, dessen Position und Orientierung relativ zu dem fördermittelbasisfesten Koordinatensystem **C1** des ersten Roboters bekannt sind.

Dadurch kann in einer Ausführung vorteilhaft eine Transformation $T_{C2, W12}$ zwischen diesem fördermittelbasisfesten Koordinatensystem **C2** des zweiten Roboters und einem messpunktsystem-, insbesondere bauteilfesten Koordinatensystem **W12** eines Messpunktsystems, insbesondere Bauteils, und des zweiten Roboters auf Basis einer bekannten Transformation $T_{C1, W11}$ zwischen dem fördermittelbasisfesten Koordinatensystem **C1** des ersten Roboters und einem messpunktsystem-, insbesondere bauteilfesten Koordinatensystem **W11** des Messpunktsystems, insbesondere Bauteils, und des ersten Roboters oder einer bekannten Transformation $T_{W11, W12}$ zwischen dem messpunktsystem-, insbesondere bauteilfesten Koordinatensystem **W11** des Messpunktsystems, insbesondere Bauteils, und des ersten Roboters und dem messpunktsystem-, insbesondere bauteilfesten Koordinatensystem **W12** eines anderen Messpunktsystems, insbesondere Bauteils, und des ersten Roboters ermittelt werden.

Dadurch kann vorteilhafterweise ein Einmessen des Messpunktsystems, insbesondere Bauteils, bzw. von dessen messpunktsystem-, insbesondere bauteilfesten Koordinatensystem und/oder ein, insbesondere zusätzliches, Einmessen eines fördermittelbasisfesten Koordinatensystem des zweiten Roboters mittels des zweiten Roboters eingespart werden.

In einer vorteilhaften Weiterbildung weisen die fördermittelbasisfesten Koordinatensysteme *C1, C2* des ersten und des bzw. der zweiten Roboter(s) dieselbe Orientierung auf. Dann kann für die Transformation $T_{C2,\,W12}$ die Orientierung bzw. Verdrehung der Transformation $T_{C1,\,W11}$ direkt bzw. identisch übernommen werden. In einer Weiterbildung sind die Koordinatensysteme *C1, C2* höchstens in Transportrichtung gegeneinander verschoben. Insbesondere dann kann die Verschieben der beiden Koordinatensysteme aus den Transportpositionen ermittelt werden, insbesondere kann die Transformation $T_{C2,\,W12}$ die mit dieser Verschiebung ergänzte Verschiebung (in) der Transformation $T_{C1,\,W11}$ übernommen werden. Wenn in einer Weiterbildung die fördermittelbasisfesten Koordinatensysteme *C1, C2* des ersten und zweiten Roboters auch dieselbe Position (ihres) Ursprungs aufweisen, kann die Transformation $T_{C1,\,W11}$ sogar vollständig direkt bzw. identisch als Transformation $T_{C2=C1,\,W12=W11}$ übernommen werden, andernfalls kann für die Transformation $T_{C2,\,W12}$ die Verschiebung der beiden Koordinatensysteme *C1*, *C2* berücksichtigt werden.

Entsprechend wird in einer Ausführung eine Transformation zwischen einem roboterfesten Koordinatensystem *R2* und einem fördermittelbasisfesten Koordinatensystem *C2* des bzw. der zweiten Roboter(s) (jeweils) auf Basis der wenigstens drei mittels des zweiten Roboters ermittelten Messpunktpositionen ermittelt, insbesondere in identischer bzw. analoger Weise wie die Transformation zwischen dem roboterfesten Koordinatensystem *R1* und dem fördermittelbasisfesten Koordinatensystem *C1* des ersten Roboters.

Alternativ oder vorteilhafterweise zusätzlich werden in einer Ausführung entsprechend für ein oder mehrere durch das Fördermittel transportierte Messpunktsysteme, insbesondere Bauteile, deren messpunktsystem-, insbesondere bauteilfeste Koordinatensysteme sich voneinander unterscheiden, die insbesondere unterschiedliche Orientierungen und/oder Positionen quer zur Transportrichtung des Fördermittels aufweisen, (jeweils) eine Transformation $T_{C2,\,W12/W22}$ zwischen einem messpunktsystem-, insbesondere bauteilfesten Koordinatensystem *W12/W22* des durch das Fördermittel transportierten Messpunktsystems, insbesondere Bauteils, und dem fördermittelbasisfesten Koordinatensystem *C2* des bzw. der zweiten Roboter(s) auf Basis einer Transformation $T_{C1,\,W11/W21}$ zwischen dem messpunktsystem-, insbesondere bauteilfesten Koordinatensystem dieses Messpunktsystems, insbesondere Bauteils, und dem fördermittelbasisfesten Koordinatensystem *C1* des ersten Roboters oder auf Basis einer Transformation $T_{W11,\,W21}$ zwischen dem messpunktsystem-, insbesondere bauteilfesten Koordinatensystem dieses Messpunktsystems, insbesondere Bauteils, und einem messpunktsystem-, insbesondere bauteilfesten Koordinatensystem eines anderen, insbesondere des ersten, Messpunktsystems, insbesondere Bauteils, und des ersten Roboters ermittelt.

In einer Ausführung wird die Transformation $T_{C1,\,W11/W21}$ zwischen dem messpunktsystem-, insbesondere bauteilfesten Koordinatensystem des Messpunktsystems, insbesondere Bauteils, und dem fördermittelbasisfesten Koordinatensystem *C1* des ersten Roboters jeweils durch dessen (Roboter)Steuerung ermittelt und an die (Roboter)Steuerung(en) des bzw. der zweiten Roboter(s) übermittelt, die ihrerseits (jeweils) auf dieser Basis die Transformation $T_{C2,\,W12/W22}$ zwischen dem messpunktsystem-, insbesondere bauteilfesten Koordinatensystem *W12/W22* des durch das Fördermittel transportierten Messpunktsystems, insbesondere Bauteils, W1 bzw. W2 und dem fördermittelbasisfesten Koordinatensystem *C2* des zweiten Roboters ermittelt.

In einer anderen Ausführung wird die Transformation $T_{W11,\,W21}$ zwischen den messpunktsystem-, insbesondere bauteilfesten Koordinatensystemen von zwei Messpunktsystemen, insbesondere Bauteilen, und des ersten Roboters jeweils durch dessen (Roboter)Steuerung ermittelt, insbesondere auf Basis der Transformationen $T_{C1,\,W11/W21}$ zwischen diesen messpunktsystem-, insbesondere bauteilfesten Koordinatensystemen und dem fördermittelbasisfesten Koordinatensystem *C1* des ersten Roboters, und an die (Roboter)Steuerung(en) des bzw. der zweiten Roboter(s) übermittelt, die ihrerseits (jeweils) auf dieser Basis die Transformation $T_{C2,\,W22}$ zwischen dem messpunktsystem-, insbesondere bauteilfesten Koordinatensystem *W22* des durch das Fördermittel transportierten Messpunktsystems, insbesondere Bauteils, W2 und dem fördermittelbasisfesten Koordinatensystem *C2* des zweiten Roboters ermittelt.

Durch die Übermittlung und Verwendung der Relativtransformation an die bzw. in der (Roboter)Steuerung des bzw. der zweiten Roboter(s) ist vorteilhafterweise eine Verschiebung der fördermittelbasisfesten Koordinatensysteme des ersten und zweiten Roboters bereits berücksichtigt. Hierzu wird in einer Ausführung die Transformation $T_{C2,\,W22}$ zwischen dem messpunktsystem-, insbesondere bauteilfesten Koordinatensystem *W22* des durch das Fördermittel transportierten Messpunktsystems, insbesondere Bauteils, W2 und dem fördermittelbasisfesten Koordinatensystem *C2* des zweiten Roboters (auch) auf Basis der Transformation $T_{C2,\,W12}$ zwischen dem messpunktsystem-, insbesondere bauteilfesten Koordinatensystem *W12* des anderen durch das Fördermittel transportierten Messpunktsystems, insbesondere Bauteils, W1 und dem fördermittelbasisfesten Koordinatensystem *C2* des zweiten Roboters ermittelt, die insbesondere in vorstehend erläuterter Weise ihrerseits auf Basis der Transformation $T_{C1,\,W11}$ zwischen dem messpunktsystem-, insbesondere bauteilfesten Koordinatensystem des anderen Messpunktsystems, insbesondere Bauteils, W1 und dem fördermittelbasisfesten Koordinatensystem *C1* des ersten Roboters ermittelt werden bzw. sein kann.

In einer Ausführung sind bzw. werden die messpunktsystem-, insbesondere bauteilfesten Koordinatensysteme des ersten und des bzw. der zweiten Roboter(s) in dieselbe Synchronisierungsposition verschoben bzw. weisen denselben Ursprung auf. Hierdurch kann insbesondere die Synchronisierung der Roboter mit dem Fördermittel und/oder untereinander verbessert werden.

In einer Ausführung erfasst ein Transportpositionsermittelungsmittel, insbesondere optisch, ein Passieren eines Messpunktsystems, insbesondere Bauteils, insbesondere ein Passieren einer Synchronisierungsposition durch ein Messpunktsystem, insbesondere Bauteil, bzw. ist hierzu eingerichtet. Es kann hierzu insbesondere eine Kamera aufweisen.

In einer Ausführung wird diese Kamera mittels des ersten Messpunktsystems, insbesondere Bauteils, kalibriert. Insbesondere können in einer Weiterbildung hierzu das erste Messpunktsystem, insbesondere Bauteil, insbesondere mittels des Fördermittels, im Sichtbereich der Kamera angeordnet und anhand des Kamerabildes intrinsische und/oder extrinsische Kameraparameter ermittelt werden.

Zusätzlich oder alternativ erfasst in einer Ausführung ein bzw. das Transportpositionsermittelungsmittel, insbesondere elektrisch, einen Transportweg bzw. eine (Transport)Bewegung des Fördermittels bzw. ist hierzu eingerichtet. Es kann hierzu insbesondere einen Drehgeber aufweisen.

In einer Ausführung wird das Transportpositionsermittelungsmittel, insbesondere ein Übersetzungsverhältnis, insbesondere ein Drehgeberübersetzungsverhältnis des Drehgebers, auf Basis der mittels des ersten Roboters ermittelten Position wenigstens eines der Messpunkte in der einen und in der anderen Transportposition kalibriert: durch die Ermittlung der Positionen desselben Messpunktes in der einen und in der anderen Transportposition kann insbesondere ein von dem Messpunkt und damit auch dem Fördermittel zurückgelegter (Transport)Weg ermittelt werden. Durch den Vergleich dieses (Transport)Weges mit dem Weg, den das Transportpositionsermittelungsmittel dabei bzw. zwischen der einen und der anderen Transportposition erfasst hat, insbesondere mit dem Drehwinkel, den der Drehgeber zwischen der einen und der anderen Transportposition erfasst hat, kann das Transportpositionsermittelungsmittel kalibriert, insbesondere ein Drehgeberübersetzungsverhältnis zwischen dem (Transport)Weg des Fördermittels und dem Weg des Transportpositionsermittelungsmittel, insbesondere dem Drehwinkel des Drehgebers, ermittelt werden.

Ein zusätzliches erneutes Einmessen von Messpunktsystemen, insbesondere Bauteilen, durch einen oder mehrere zweite Roboter kann in einer Ausführung vorteilhaft insbesondere auch nach einer Modifikation eines bzw. des Transportpositionsermittelungsmittels zum Ermitteln von Transportpositionen eingespart werden.

Eine Transportposition eines Messpunktsystems, insbesondere Bauteils, wird in einer Ausführung auf Basis einer durch das Transportpositionsermittelungsmittel erfassten Bewegung des Fördermittels relativ zu einer Synchronisierungsposition ermittelt, die bzw. deren Vorliegen bzw. Erreichen durch das Messpunktsystem, insbesondere Bauteil, ihrerseits in einer Ausführung auf Basis einer Erfassung des entsprechenden durch das Fördermittel transportierten Messpunktsystems, insbesondere Bauteils, durch das Transportpositionsermittelungsmittel ermittelt wird.

So kann insbesondere eine Transportposition den Weg eines Messpunktsystems, insbesondere Bauteils, angeben bzw. von diesem abhängen, den das Messpunktsystem, insbesondere Bauteil, durch Transport durch das Fördermittel zurückgelegt hat, seit es durch eine Kamera an einer vorgegebenen, fördermittelbasisfesten Stelle erfasst worden ist.

Wird nun beispielsweise die Kamera ausgetauscht oder an einer anderen Stelle platziert, verändern sich entsprechend die Synchronisierungspositionen der Messpunktsysteme, insbesondere Bauteile, bzw. messpunktsystem-, insbesondere bauteilfesten Koordinatensysteme.

Indem jedoch die Transformation $T_{C2, W'12}$ zwischen einem messpunktsystem-, insbesondere bauteilfesten Koordinatensystem $W'12$ des durch das Fördermittel transportierten Messpunktsystems, insbesondere Bauteils, W1 und dem fördermittelbasisfesten Koordinatensystem $C2$ eines zweiten Roboters auf Basis eines messpunktsystem-, insbesondere bauteilfesten Koordinatensystems dieses Messpunktsystems, insbesondere Bauteils, und des ersten Roboters ermittelt wird, das mittels des modifizierten Transportpositionsermittelungsmittels ermittelt wird bzw. worden ist, kann vorteilhaft ein zusätzliches erneutes Einmessen der Messpunktsysteme, insbesondere Bauteile, auch durch den zweiten Roboter infolge einer Modifikation des Transportpositionsermittelungsmittels eingespart werden.

Entsprechend umfasst das Verfahren in einer Ausführung die Schritte:

- Modifizieren eines bzw. des Transportpositionsermittelungsmittels zum Ermitteln von Transportpositionen;
- Ermitteln eines messpunktsystem-, insbesondere bauteilfesten Koordinatensystems $W'11/W'21$ eines oder mehrerer durch das Fördermittel transportierter Messpunktsysteme, insbesondere Bauteile, W1 bzw. W2 und des ersten Roboters mittels des modifizierten Transportpositionsermittelungsmittels; und
- Ermitteln einer Transformation $T_{C2, W'12/W'22}$ zwischen dem messpunktsystem-, insbesondere bauteilfesten Koordinatensystem $W'12/W'22$ des jeweiligen Messpunktsystems, insbesondere Bauteils, und einem roboterfesten Koordinatensystem $C2$ des bzw. der zweiten Roboter(s) auf Basis des messpunktsystem-, insbesondere bauteilfesten Koordinatensystems $W'11/W'21$ des Messpunktsystems, insbesondere Bauteils, und des ersten Roboters, das mittels des modifizierten Transportpositionsermittelungsmittels ermittelt wird bzw. worden ist.

Insbesondere kann in einer Ausführung eine Transformation zwischen dem roboterfesten Koordinatensystem eines zweiten Roboters und einem messpunktsystem-, insbesondere bauteilfesten Koordinatensystem eines Messpunktsystems, insbesondere Bauteils, des zweiten Roboters auf Basis einer Transformation zwischen einem messpunktsystem-, insbesondere bauteilfesten Koordinatensystem des Messpunktsystems, insbesondere Bauteils, und des ersten Roboters für das ursprüngliche und für das modifizierte Transportpositionsermittelungsmittel ermittelt werden, da sich die Modifikation des Transportpositionsermittelungsmittels in identischer Weise auf die Transformationen des ersten und zweiten Roboters auswirkt.

Entsprechend wird in einer Ausführung somit nach dem Modifizieren des Transportpositionsermittelungsmittels auf Basis der Transformation $T_{C1, W'11/W'21}$ zwischen einem messpunktsystem-, insbesondere bauteilfesten Koordinatensystem **W'11/W'21** eines oder mehrerer durch das Fördermittel transportierter Messpunktsysteme, insbesondere Bauteile, W1 bzw. W2 und einem roboterfesten Koordinatensystem **C1** des ersten Roboters, insbesondere durch die (Roboter)Steuerung des ersten Roboters, eine Transformation $T_{W11,W'11/W121,W'21}$ zwischen den messpunktsystem-, insbesondere bauteilfesten Koordinatensystemen **W111W21** des jeweiligen Messpunktsystems, insbesondere Bauteils, W1 bzw. W2 und des ersten Roboters für das ursprüngliche Transportpositionsermittelungsmittel und den messpunktsystem-, insbesondere bauteilfesten Koordinatensystemen **W'11/W'21** des jeweiligen Messpunktsystems, insbesondere Bauteils, W1 bzw. W2 und des ersten Roboters für das modifizierte Transportpositionsermittelungsmittel ermittelt und auf deren Basis dann jeweils die Transformation $T_{C2, W'12/W'22}$ zwischen dem messpunktsystem-, insbesondere bauteilfesten Koordinatensystem des jeweiligen Messpunktsystems, insbesondere Bauteils, und einem roboterfesten Koordinatensystem **C2** des bzw. der zweiten Roboter für das modifizierte Transportpositionsermittelungsmittel ermittelt.

In einer Ausführung wird die Transformation $T_{W11,W'11/W121,W'21}$ jeweils durch die (Roboter)Steuerung des ersten Roboters ermittelt und an die (Roboter)Steuerung des bzw. der zweiten Roboter(s) übermittelt, die ihrerseits auf dieser Basis die Transformation $T_{C2,W'12/W'22}$ ermittelt.

Das Ermitteln eines Koordinatensystems bzw. einer Transformationen kann in einer Ausführung in der vorstehend erläuterten Weise auf Basis von Positionen entsprechender Messpunkte, die mittels des jeweiligen Roboters ermittelt werden, erfolgen.

Ein zusätzliches erneutes Einmessen von verschiedenen Messpunktsystemen, insbesondere Bauteilen, durch einen zweiten Roboter kann in einer Ausführung vorteilhaft insbesondere auch nach einem Austausch dieses Roboters eingespart werden.

Wenn die Transformation zwischen dem roboterfesten Koordinatensystem des zweiten Roboters und den messpunktsystem-, insbesondere bauteilfesten Koordinatensystemen verschiedener Messpunktsysteme, insbesondere Bauteile, auf Basis einer Transformation zwischen einem messpunktsystem-, insbesondere bauteilfesten Koordinatensystem des jeweiligen Messpunktsystems, insbesondere Bauteils, und des ersten Roboters und dem roboterfesten Koordinatensystem des ersten Roboters oder eines messpunktsystem-, insbesondere bauteilfesten Koordinatensystem eines anderen Messpunktsystems, insbesondere Bauteils, und des ersten Roboters ermittelt wird, reicht es vorteilhafterweise, bei Austausch eines Roboters nur dessen fördermittelbasisfestes Koordinatensystem bzw. die durch den Austausch bedingte Änderung der Transformation zwischen dem roboter- und den fördermittelbasisfesten Koordinatensystemen zu ermitteln.

Entsprechend weist in einer Ausführung das Verfahren die Schritte auf:

- Austauschen des zweiten Roboters durch einen dritten Roboter;
- Ermitteln einer Transformation $T_{C1, W1'1}$ zwischen einem messpunktsystem-, insbesondere bauteilfesten Koordinatensystem **W1'1** eines durch das Fördermittel transportierten Messpunktsystems, insbesondere Bauteils, W1' und einem fördermittelbasisfesten Koordinatensystem **C1** des ersten Roboters; und
- Ermitteln einer Transformation $T_{C2', W1'2'}$ zwischen einem fördermittelbasisfesten Koordinatensystem **C2'** und einem roboterfesten Koordinatensystem **R2'** des dritten Roboters auf Basis der Transformation $T_{C1, W1'1}$ zwischen dem messpunktsystem-, insbesondere bauteilfesten Koordinatensystem und dem fördermittelbasisfesten Koordinatensystem des ersten Roboters.

Das Ermitteln einer Transformation kann in einer Ausführung auch hier in der vorstehend erläuterten Weise auf Basis von Positionen entsprechender Messpunkte, die mittels des jeweiligen Roboters ermittelt und auf deren Basis die entsprechenden Koordinatensysteme ermittelt, insbesondere definiert, werden, erfolgen.

In einer Ausführung können jeweils Messpunkte des Bauteils selber mittels der Roboter eingemessen bzw. ihre Positionen ermittelt werden. Insbesondere, um das Einmessen, insbesondere Antasten, zu verbessern, wird stattdessen in einer Ausführung ein anderes Messpunktsystem in Form einer mit dem Fördermittel verbundenen, insbesondere integral mit dem Fördermittel ausgebildeten, Messpunktanordnung mit an dem Fördermittel angeordneten bzw. ausgebildeten Messpunkten oder eines, insbesondere plattenartigen, Kalibrierbauteils verwendet, deren bzw. dessen Messpunkte in einer Weiterbildung geometrisch, insbesondere durch Vertiefungen, Ecken oder dergleichen, und/oder optisch, insbesondere farblich, durch Hell-Dunkel-Kennzeichnungen oder dergleichen, definiert sind, und/oder deren bzw. dessen Orientierung und Position quer zur Transportrichtung des Fördermittels in einer Weiterbildung dem durch das Fördermittel zu transportierenden und mittels Robotern des Systems handzuhabenden und/oder zu bearbeitenden Bauteil entspricht.

Ein Mittel im Sinne der vorliegenden Erfindung kann hard- und/oder softwaretechnisch ausgebildet sein, insbesondere eine, vorzugsweise mit einem Speicher- und/oder Bussystem daten- bzw. signalverbundene, insbesondere digitale, Verarbeitungs-, insbesondere Mikroprozessoreinheit (CPU) und/oder ein oder mehrere Programme oder Programmmodule aufweisen. Die CPU kann dazu ausgebildet sein, Befehle, die als ein in einem Speichersystem abgelegtes Programm implementiert sind, abzuarbeiten, Eingangssignale von einem Datenbus zu erfassen und/oder Ausgangssignale an einen Datenbus abzugeben. Ein Speichersystem kann ein oder mehrere, insbesondere verschiedene, Speichermedien, insbesondere optische, magnetische, Festkörper- und/oder andere nicht-flüchtige Medien aufweisen. Das Programm kann derart beschaffen sein, dass es die hier beschriebenen Verfahren verkörpert bzw. auszuführen imstande ist, sodass die CPU die Schritte solcher Verfahren ausführen kann und damit insbesondere das System, insbesondere dessen Roboter, steuern kann.

Die (Roboter)Steuerung(en) des Systems sind zur Durchführung eines hier beschriebenen Verfahrens eingerichtet und/oder weisen auf:

Mittel zum Ermitteln der Positionen von wenigstens, insbesondere genau, drei Messpunkten eines durch das Fördermittel transportierten ersten Messpunktsystems, insbesondere Bauteils, in einer Transportposition mittels des ersten Roboters; sowie

Mittel zum Ermitteln der Position von wenigstens, insbesondere genau, einem dieser Messpunkte in einer anderen Transportposition mittels des ersten Roboters; und/oder Mittel zum Ermitteln der Positionen von wenigstens, insbesondere genau, zwei Messpunkten des ersten Messpunktsystems, insbesondere Bauteils, in einer Transportposition und der Position von wenigstens, insbesondere genau, einem weiteren Messpunkt in dieser Transportposition oder von wenigstens, insbesondere genau, einem dieser Messpunkte in einer anderen Transportposition mittels wenigstens eines zweiten Roboters des Systems.

In einer Ausführung weisen die (Roboter)Steuerung(en) des Systems auf:

Mittel zum Ermitteln einer Transformation zwischen einem fördermittelbasisfesten Koordinatensystem und einem roboterfesten Koordinatensystem des ersten Roboters und/oder einer Transformation zwischen einem messpunktsystem-, insbesondere bauteilfesten Koordinatensystem des ersten Messpunktsystems, insbesondere Bauteils, und einem fördermittelbasisfesten Koordinatensystem des ersten Roboters auf Basis der wenigstens, insbesondere genau, vier mittels des ersten Roboters ermittelten Positionen; und/oder

Mittel zum Ermitteln einer Transformation zwischen einem roboterfesten Koordinatensystem und einem fördermittelbasisfesten Koordinatensystem des zweiten Roboters auf Basis der wenigstens drei mittels des zweiten Roboters ermittelten Positionen; und/oder

Mittel zum Ermitteln einer Transformation zwischen einem messpunktsystem-, insbesondere bauteilfesten Koordinatensystem eines durch das Fördermittel transportierten Messpunktsystems, insbesondere Bauteils, und einem fördermittelbasisfesten Koordinatensystem des zweiten Roboters auf Basis einer Transformation zwischen dem messpunktsystem-, insbesondere bauteilfesten Koordinatensystem des Messpunktsystems, insbesondere Bauteils, und einem fördermittelbasisfesten Koordinatensystem des ersten Roboters oder einem messpunktsystem-, insbesondere bauteilfesten Koordinatensystem eines anderen Messpunktsystems, insbesondere Bauteils, und des ersten Roboters; und/oder

Mittel zum Kalibrieren eines Transportpositionsermittelungsmittel des Systems auf Basis der mittels des ersten Roboters ermittelten Position wenigstens eines der Messpunkte in der einen und in der anderen Transportposition; und/oder

Mittel zum Ermitteln wenigstens eines messpunktsystem-, insbesondere bauteilfesten Koordinatensystems eines Messpunktsystems, insbesondere Bauteils, und des ersten Roboters (10) mittels eines modifizierten Transportpositionsermittelungsmittels; und Mittel zum Ermitteln einer Transformation zwischen dem messpunktsystem-, insbesondere bauteilfesten Koordinatensystem des jeweiligen Messpunktsystems, insbesondere Bauteils, und einem fördermittelbasisfesten Koordinatensystem des zweiten Roboters auf Basis dieses messpunktsystem-, insbesondere bauteilfesten Koordinatensystems des Messpunktsystems, insbesondere Bauteils, und des ersten Roboters; und/oder

Mittel zum Ermitteln einer Transformation zwischen einem messpunktsystem-, insbesondere bauteilfesten Koordinatensystem eines durch das Fördermittel transportierten Messpunktsystems, insbesondere Bauteils, und einem fördermittelbasisfesten Koordinatensystem des ersten Roboters; und Mittel zum Ermitteln einer Transformation zwischen einem fördermittelbasisfesten Koordinatensystem und einem roboterfesten Koordinatensystem eines dritten Roboters, gegen den ein zweiter Roboter ausgetauscht wurde, auf Basis der Transformation zwischen dem messpunktsystem-, insbesondere bauteilfesten Koordinatensystem und dem fördermittelbasisfesten Koordinatensystem des ersten Roboters; und/oder

Mittel zum Ermitteln von Transportpositionen auf Basis erfasster Bewegung des Fördermittels relativ zu einer Synchronisierungsposition; und/oder

Mittel zum Ermitteln der Synchronisierungsposition auf Basis einer Erfassung des entsprechenden durch das Fördermittel transportierten Messpunktsystems, insbesondere Bauteils.

Ein, insbesondere erstes, durch das Fördermittel transportiertes Bauteil kann in einer Ausführung zerstörungsfrei lösbar, insbesondere lose, auf dem Fördermittel angeordnet sein bzw. werden. Gleichermaßen kann in einer Ausführung zur Kalibrierung auch eine fest mit dem Fördermittel verbundene, insbesondere integral mit dem Fördermittel ausgebildete, Messpunktanordnung verwendet werden, insbesondere Messpunkte, die an dem Fördermittel selber angeordnet bzw. ausgebildet sind bzw. werden. Ein Messpunktsystem im Sinne der vorliegenden Erfindung kann daher insbesondere ein durch Roboter des Systems handzuhabendes und/oder zu bearbeitendes Bauteil selber, eine mit dem Fördermittel verbundene, insbesondere integral mit dem Fördermittel ausgebildete, Messpunktanordnung mit an dem Fördermittel angeordneten bzw. ausgebildeten Messpunkten oder ein, insbesondere plattenartiges, Kalibrierbauteil sein. Weitere Vorteile und Merkmale ergeben sich aus den Unteransprüchen und den Ausführungsbeispielen. Hierzu zeigen, teilweise schematisiert:

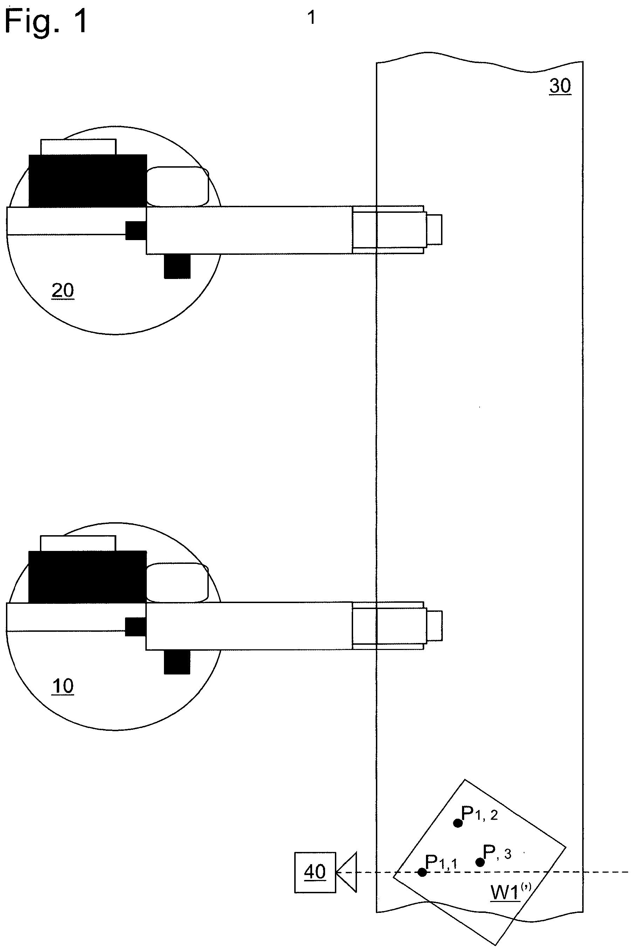

Fig. 1 - 4:    Schritte eines Kalibrierens eines Systems nach einer Ausführung der vorliegenden Erfindung.

Fig. 1 zeigt ein System mit einem linearen Fördermittel in Form eines Förderbandes 30, einem ersten Roboter 10 und einem zweiten Roboter 20 zum Handhaben und/oder Bearbeiten von ersten und zweiten Bauteilen, die sich voneinander und/oder durch ihre Orientierung und/oder Position senkrecht zur Transportrichtung des Förderbandes (vertikal nach oben in Fig. 1) unterscheiden.

Die Erfindung wird nachfolgend exemplarisch anhand der beiden Roboter und Bauteiltypen erläutert, es versteht sich, dass analog zu dem einen zweiten auch weitere (zweite) Roboter und/oder analog zu den einen zweiten auch weitere (zweite) Bauteile vorhanden sein können, die und/oder deren Orientierung und/oder Position senkrecht zur Transportrichtung des Förderbandes sich von den bzw. denen der ersten und einen zweiten Bauteile(n) unterscheiden, wobei die hier beschriebenen Merkmale in gleicher Weise auch für diese weiteren Roboter und/oder Bauteile realisiert sein können.

In einem in Fig. 1 dargestellten Schritt wird ein plattenartiges Kalibrierbauteil W1 auf dem Förderband so platziert, dass seine Orientierung und Position quer zur Transportrichtung des Fördermittels einem ersten Bauteil entspricht.

Es weist drei Messpunkte $P_{1,1}$, $P_{1,2}$, und $P_{1,3}$ auf, die geometrisch so definiert sind, dass sie von den Robotern 10, 20 präzise angetastet werden können. Alternativ kann auch direkt eines der ersten Bauteile selber verwendet werden. Alternativ können die Messpunkte auch auf dem Förderband selber angeordnet bzw. ausgebildet sein bzw. ein integral mit dem Förderband ausgebildetes Messpunktsystem verwendet werden.

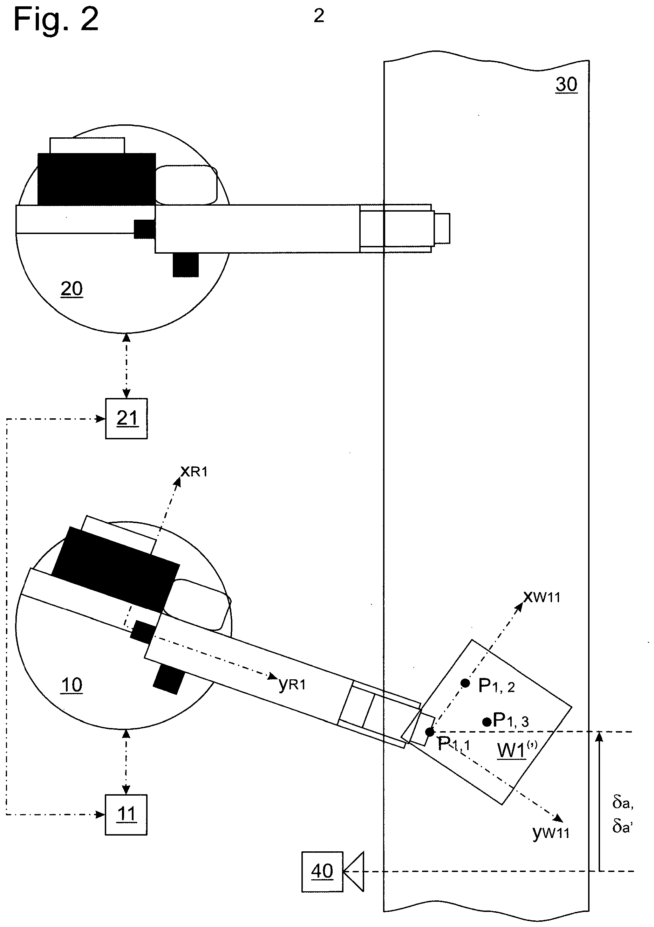

Durch eine Kamera eines Transportpositionsermittelungsmittels 40 wird erfasst, sobald die Kalibrierplatte W1 eine in Fig. 1 durch eine horizontale gestrichelte Linie angedeutete Synchronisierungsposition passiert. Wie in Fig. 2-4 durch vertikale Pfeile nach oben angedeutet, wird eine Transportposition $\delta$ der Kalibrierplatte W1 relativ zu dieser Synchronisierungsposition auf Basis einer mittels eines Drehgebers des Transportpositionsermittelungsmittels 40 erfassten Bewegung des Fördermittels ermittelt, insbesondere auf Basis eines Drehwinkels $\Psi$ des Drehgebers.

Dabei kann in der in Fig. 1 gezeigten Position die Kamera des Transportpositionsermittelungsmittels 40 mittels des Kalibrierbauteil W1 kalibriert werden. Insbesondere können hierzu das Kalibrierbauteil mittels des Fördermittels 30 im Sichtbereich der Kamera angeordnet und anhand des Kamerabildes intrinsische und/oder extrinsische Kameraparameter ermittelt werden.

In einem in Fig. 2 dargestellten Schritt wird die Kalibrierplatte W1 durch das Förderband 30 in eine Transportposition $\delta_a$ transportiert. In dieser werden Positionen $p_{1,1}(\delta_a)$, $p_{1,2}(\delta_a)$, $p_{1,3}(\delta_a)$ der drei Messpunkte $P_{1,1}$, $P_{1,2}$, und $P_{1,3}$ mittels des ersten Roboters 10 in dessen roboterfestem, durch $x_{R1}$, $y_{R1}$ angedeuteten Koordinatensystem **R1** ermittelt, indem dieser die Messpunkte antastet. Alternativ könnten auch Messpunkte optisch erfasst oder geometrisch definierte Geraden oder Ebenen abgefahren werden.

Auf Basis dieser Positionen definiert eine Steuerung 11 des ersten Roboters 10 ein bauteilfestes Koordinatensystem **W11**$(\delta_a)$ der Kalibrierplatte W1 und des ersten Roboters, dessen Ursprung im Punkt $P_{1,1}$ liegt, dessen x-Achse durch den Punkt $P_{1,2}$ verläuft, dessen z-Achse senkrecht zu der durch die Punkte $P_{1,1}$, $P_{1,2}$, und $P_{1,3}$ definierten Transportebene steht, und das durch $x_{W11}$, $y_{W11}$ angedeutet ist.

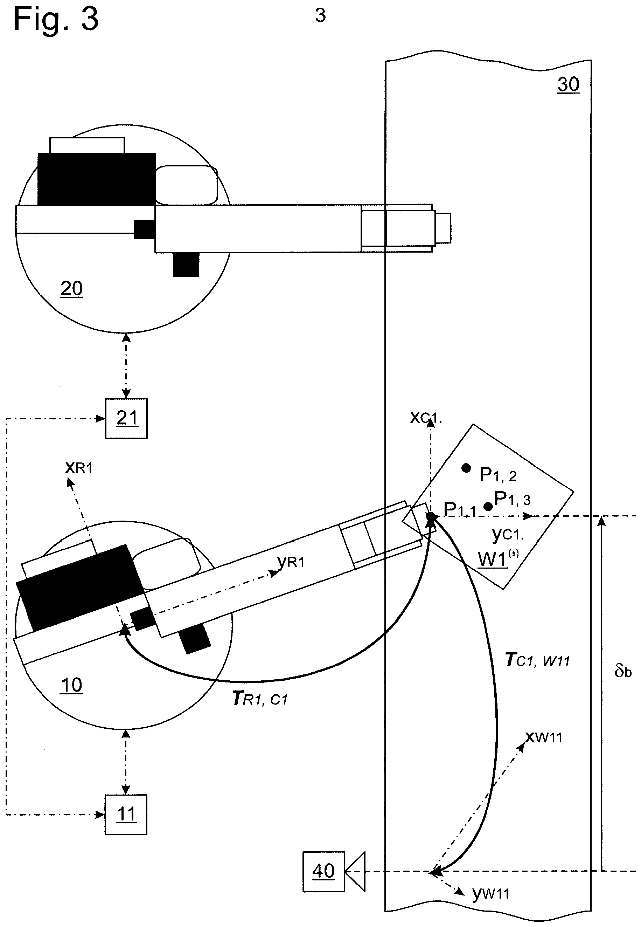

In einem in Fig. 3 dargestellten Schritt wird die Kalibrierplatte W1 durch das Förderband 30 in eine andere Transportposition $\delta_b$ transportiert und in dieser die Position $p_{1,1}(\delta_b)$ des Messpunktes $P_{1,1}$ mittels des ersten Roboters 10 in dessen roboterfestem Koordinatensystem **R1** ermittelt.

Auf Basis der Positionen $p_{1,1}(\delta_a)$, $p_{1,1}(\delta_b)$ und $p_{1,2}(\delta_a)$ oder $p_{1,3}(\delta_a)$ definiert die Steuerung 11 ein fördermittelbasisfestes Koordinatensystem **C1** des ersten Roboters, dessen x-Achse durch die Positionen $p_{1,1}(\delta_a)$, $p_{1,1}(\delta_b)$ verläuft und somit mit der Transportrichtung fluchtet, dessen z-Achse senkrecht zu der durch drei der Positionen $p_{1,1}(\delta_a)$, $p_{1,1}(\delta_b)$, $p_{1,2}(\delta_a)$ und $p_{1,3}(\delta_a)$ definierten Transportebene steht, dessen Ursprung beispielsweise in der Positionen $p_{1,1}(\delta_a)$ oder $p_{1,1}(\delta_b)$ liegt, und das durch $x_{C1}$, $y_{C1}$ angedeutet ist.

Zusätzlich wird ein Drehgeberübersetzungsverhältnis des Drehgebers des Transportpositionsermittelungsmittels 40 auf Basis der mittels des ersten Roboters 10 ermittelten Position $\boldsymbol{p}_{1,1}(\delta_a)$ des Messpunktes $P_{1,1}$ in der einen Transportposition und der mittels des ersten Roboters 10 ermittelten Position $\boldsymbol{p}_{1,1}(\delta_b)$ desselben Messpunktes $P_{1,1}$ in der anderen Transportposition kalibriert: durch die Ermittlung der Positionen desselben Messpunktes in der einen und in der anderen Transportposition kann insbesondere ein von dem Messpunkt $P_{1,1}$ und damit auch dem Fördermittel 30 zurückgelegter (Transport)Weg ermittelt werden. Durch den Vergleich dieses (Transport)Weges mit dem Drehwinkel $\Psi$, den der Drehgeber des Transportpositionsermittelungsmittels 40 zwischen der einen und der anderen Transportposition erfasst hat, kann ein Drehgeberübersetzungsverhältnis zwischen dem (Transport)Weg des Fördermittels 30 und dem Drehwinkel des Drehgebers des Transportpositionsermittelungsmittels 40 ermittelt werden:

$$\frac{\left| \boldsymbol{p}_{1,1}(\delta_b) - \boldsymbol{p}_{1,1}(\delta_a) \right|}{\Psi} \; .$$

Anschließend wird das bauteilfeste Koordinatensystem $\boldsymbol{W11}$ der Kalibrierplatte W1 und des ersten Roboters entgegen der x-Achse des Koordinatensystems $\boldsymbol{C1}$ um $\delta_a$, d.h. in die Synchronisierungsposition verschoben ($\boldsymbol{W11} = \boldsymbol{W11}(\delta=0)$), damit sich später im Betrieb der Ursprung des bauteilfesten Koordinatensystems nach dem Auslösen des Synchronsierungsschalters in der Synchronposition befindet, und die Transformationen $\boldsymbol{T}_{R1,C1}$ zwischen dem fördermittelbasisfesten Koordinatensystem $\boldsymbol{C1}$ und dem roboterfesten Koordinatensystem $\boldsymbol{R1}$ sowie $\boldsymbol{T}_{C1,W11}$ zwischen dem bauteilfesten Koordinatensystem $\boldsymbol{W11}$ und dem fördermittelbasisfesten Koordinatensystem $\boldsymbol{C1}$ ermittelt.

Man erkennt, dass vorteilhaft beide Koordinatensysteme $\boldsymbol{C1, W11}$ bzw. Transformationen $\boldsymbol{T}_{R1,C1}$, $\boldsymbol{T}_{C1,W11}$ vorteilhaft auf Basis von nur vier ermittelten Positionen $\boldsymbol{p}_{1,1}(\delta_a)$, $\boldsymbol{p}_{1,1}(\delta_b)$, $\boldsymbol{p}_{1,2}(\delta_a)$ und $\boldsymbol{p}_{1,3}(\delta_a)$ ermittelt werden.

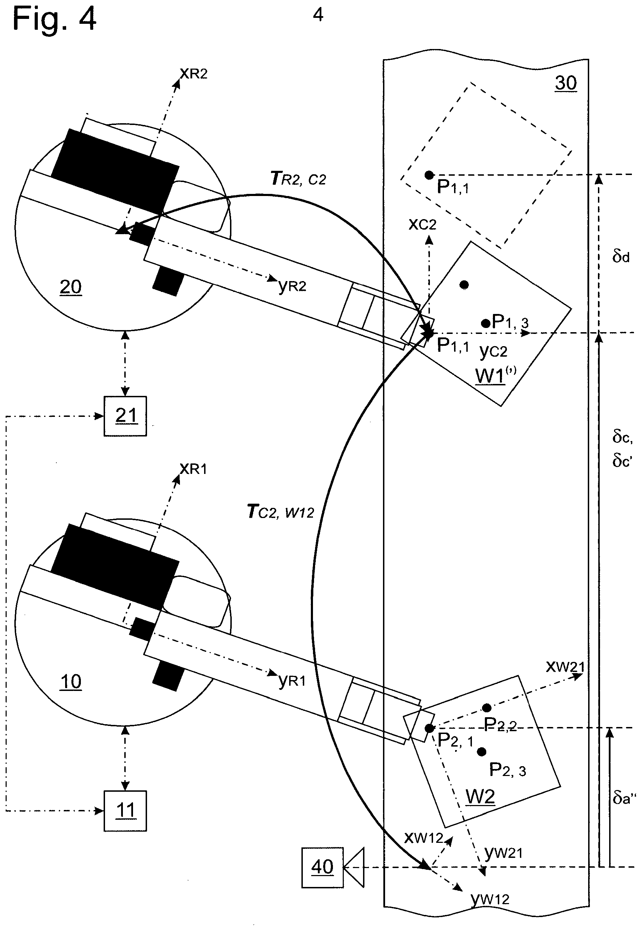

In einem in Fig. 4 dargestellten Schritt werden die Kalibrierplatte W1 durch das Förderband 30 in eine Transportposition $\delta_c$ transportiert und in dieser die Position $\boldsymbol{p}_{1,1}(\delta_c)$ und $\boldsymbol{p}_{1,2}(\delta_c)$ oder $\boldsymbol{p}_{1,3}(\delta_c)$ der Messpunkte $P_{1,1}$ und $P_{1,2}$ bzw. $P_{1,3}$ mittels des zweiten Roboters 20 in dessen roboterfestem, durch $x_{R2}$, $_{yR2}$ angedeuteten Koordinatensystem $\boldsymbol{R2}$ ermittelt. Anschließend wird die Kalibrierplatte W1 analog zu der Figurenfolge Fig. 2 → Fig. 3 durch das Förderband 30 in eine andere Transportposition $\delta_d$ transportiert und in dieser die Position $\boldsymbol{p}_{1,1}(\delta_d)$ des Messpunktes $P_{1,1}$ mittels des zweiten Roboters 20 in dessen roboterfestem Koordinatensystem $\boldsymbol{R2}$ ermittelt.

Auf Basis der Positionen $\boldsymbol{p}_{1,1}(\delta_c)$, $\boldsymbol{p}_{1,1}(\delta_d)$ und $\boldsymbol{p}_{1,2}(\delta_c)$ bzw. $\boldsymbol{p}_{1,3}(\delta_c)$ definiert eine Steuerung 21 des zweiten Roboters 20 ein fördermittelbasisfestes Koordinatensystem $\boldsymbol{C2}$ des zweiten Roboters, dessen x-Achse durch die Positionen $\boldsymbol{p}_{1,1}(\delta_c)$, $\boldsymbol{p}_{1,1}(\delta_d)$ verläuft und somit mit der Transportrichtung fluchtet, dessen z-Achse senkrecht zu der durch drei der Positionen $\boldsymbol{p}_{1,1}(\delta_c)$, $\boldsymbol{p}_{1,1}(\delta_d)$, $\boldsymbol{p}_{1,2}(\delta_c)$ und $\boldsymbol{p}_{1,3}(\delta_c)$ definierten Transportebene steht, dessen Ursprung beispielsweise in der Position $\boldsymbol{p}_{1,1}(\delta_c)$ oder $\boldsymbol{p}_{1,1}(\delta_d)$ liegt, und das durch $x_{C2}$, $_{yC2}$ angedeutet ist.

Eine Transformation $\boldsymbol{T}_{C2,W12}$ zwischen diesem fördermittelbasisfesten Koordinatensystem $\boldsymbol{C2}$ **des** zweiten Roboters 20 und einem bauteilfesten Koordinatensystem $\boldsymbol{W12}$ der Kalibrierplatte W1 und des zweiten Roboters 20 ermittelt die Steuerung 21 auf Basis der Transformation $\boldsymbol{T}_{C1,W11}$ zwischen dem fördermittelbasisfesten Koordinatensystem $\boldsymbol{C1}$ des ersten Roboters 10 und dem bauteilfesten Koordinatensystem $\boldsymbol{W11}$ der Kalibrierplatte W1 und des ersten Roboters 10. Hierzu übermittelt die Steuerung 11 die (Parameter der) $\boldsymbol{T}_{C1,W11}$ an die mit ihr datentechnisch verbundene bzw. kommunizierende Steuerung 21.

Da die beiden Koordinatensysteme $\boldsymbol{C1, C2}$ des ersten und zweiten Roboters nur entlang ihrer fluchtenden x-Achse gegeneinander verschoben sind, kann dabei die Verdrehung in das bauteilfeste Koordinatensystem bzw. der Transformation $\boldsymbol{T}_{C1,W11}$ direkt bzw. unverändert übernommen werden. Das bauteilfeste Koordinatensystem $\boldsymbol{W12}$ der Kalibrierplatte W1 und des zweiten Roboters 20 wird ebenfalls entgegen der x-Achse des Koordinatensystem $\boldsymbol{C2}$ in die Synchronisierungsposition verschoben, diese Verschiebung kann ebenso wie die Verschiebung der Koordinatensysteme $\boldsymbol{C1, C2}$ direkt aus den Transportpositionen ermittelt werden.

Stimmen in einer Abwandlung der Ursprung des fördermittelbasisfesten Koordinatensystems $\boldsymbol{C2}$ des zweiten Roboters 20 und der Ursprung des fördermittelbasisfesten Koordinatensystems $\boldsymbol{C1}$ des ersten Roboters 10 überein, da beispielsweise das Koordinatensystem $\boldsymbol{C2}$ entsprechend ($\delta_{a/b} - \delta_{c/d}$) entgegen der x-Achse des Koordinatensystem $\boldsymbol{C2}$ in den Ursprung des Koordinatensystems $\boldsymbol{C1}$ verschoben wurde, kann die Transformation $\boldsymbol{T}_{C1,W12}$ sogar vollständig direkt bzw. unverändert übernommen werden ($\boldsymbol{T}_{C2,W12} = \boldsymbol{T}_{C1,W11}$).

Man erkennt, dass beide Koordinatensysteme $\boldsymbol{C2, W12}$ bzw. Transformationen $\boldsymbol{T}_{R2,C2}$, $\boldsymbol{T}_{C2,W12}$ vorteilhaft auf Basis von nur drei ermittelten Positionen $\boldsymbol{p}_{1,1}(\delta_c)$, $\boldsymbol{p}_{1,1}(\delta_d)$ und $\boldsymbol{p}_{1,2}(\delta_c)$ oder $\boldsymbol{p}_{1,3}(\delta_c)$ und der übermittelten Transformation $\boldsymbol{T}_{C1,W11}$ zwischen dem fördermittelbasisfesten Koordinatensystem $\boldsymbol{C1}$ des ersten Roboters 10 und dem bauteilfesten Koordinatensystem $\boldsymbol{W11}$ der Kalibrierplatte W1 und des ersten Roboters 10 ermittelt werden.

In Fig. 4 ist zusätzlich das Einmessen einer zweiten Kalibrierplatte W2 durch den ersten Roboter 10 angedeutet, deren Orientierung und Position quer zur Transportrichtung des Fördermittels einem zweiten Bauteil entspricht.

In analoger, vorstehend mit Bezug auf W1 und Fig. 2, 3 erläuterten Weise kann auch für diese zweite Kalibrierplatte W2 (bzw. die zweiten Bauteile) durch Ermitteln der Positionen $\boldsymbol{p}_{2,1}(\delta_{a''})$, $\boldsymbol{p}_{2,2}(\delta_{a''})$ und $\boldsymbol{p}_{2,3}(\delta_{a''})$ von drei Mes-

spunkten $P_{2,1}$, $P_{2,2}$, und $P_{2,3}$ mittels des ersten Roboters 10 in dessen Koordinatensystem $R1$ ein bauteilfestes Koordinatensystem $W21(\delta_{a''})$ der Kalibrierplatte W2 und des ersten Roboters und hieraus nach dessen Verschiebung in die Synchronisierungsposition die Transformation $T_{C1,W21}$ zwischen diesem bauteilfesten Koordinatensystem $W21 = W21(\delta=0)$ und dem fördermittelbasisfesten Koordinatensystem $C1$ ermittelt werden.

In analoger, vorstehend mit Bezug auf $W11$, $W12$ und Fig. 4 erläuterten Weise kann auch für diese zweite Kalibrierplatte (bzw. die zweiten Bauteile) für den zweiten Roboter jeweils eine Transformation $T_{C2,W22}$ zwischen einem bauteilfesten, insbesondere in die Synchronisierungsposition verschobenen, Koordinatensystem $W22$ der zweiten Kalibrierplatte W2 und dem fördermittelbasisfesten Koordinatensystem $C2$ des zweiten Roboters auf Basis dieser Transformation $T_{C1,W21}$ zwischen dem bauteilfesten Koordinatensystem $W11$ und dem fördermittelbasisfesten Koordinatensystem $C1$ des ersten Roboters ermittelt werden.

Gleichermaßen kann zunächst die Steuerung 11 die Transformation $T_{W11,W21}$ zwischen den beiden bauteilfesten Koordinatensystemen $W11$, $W21$ und des ersten Roboters ermitteln, beispielsweise gemäß $T_{W11,W21} = T_{C1,W21}(T_{C1,W11})^{-1}$. Diese kann die Steuerung 11 an die Steuerung 21 übermitteln, die hieraus und der bereits ermittelten Transformation $T_{C2,W12}$ in einfacher Weise die Transformation $T_{C2,W22}$ ermitteln kann, beispielsweise gemäß $T_{C2,W22} = T_{W11,W21} T_{C2,W12}$.

Man erkennt, dass vorteilhaft ein neues Bauteil, im vorstehend erläuterten Beispiel exemplarisch das zweite Bauteil bzw. die ihm entsprechende Kalibrierplatte W2, nur für den bzw. mittels des ersten Roboter(s) 10 eingemessen werden muss und die Transformationen zwischen dem fördermittelbasis- und dem bauteilfesten Koordinatensystem der weiteren Roboter, im vorstehend erläuterten Beispiel exemplarisch des zweiten Roboters 20, auf Basis der Transformationen zwischen den beiden bauteilfesten Koordinatensystemen $W11$, $W21$ und des ersten Roboters ermittelt werden. Statt dieser Transformation $T_{W11,W21}$ kann gleichermaßen auch die Transformation $T_{C1,W21}$ an die Steuerung 21 übermittelt werden, die hieraus in der vorstehend erläuterten Weise wiederum die Transformation $T_{C2,W22}$ ermitteln kann.

Wird der zweite Roboter 20 durch einen dritten Roboter ausgetauscht, so werden in analoger, vorstehend mit Bezug auf Fig. 2, 4 erläuter Weise mittels des ersten Roboters die Positionen $p_{1,1}(\delta_{a'})$, $p_{1,2}(\delta_a)$ und $p_{1,3}(\delta_{a'})$ und mittels des neuen dritten Roboters die Positionen $p_{1,1}(\delta_{c'})$, $p_{1,2}(\delta_{c'})$ und $p_{1,3}(\delta_{c'})$ der Messpunkte einer Kalibrierplatte W1' oder eines Bauteils selber ermittelt. Diese Kalibrierplatte W1' dient nur als Referenzkörper zum Einmessen des ausgetauschten dritten Roboters und muss daher keinem Bauteil entsprechen.

Der Abstand dieser beiden Transportpositionen $\delta_{a'}$, $\delta_{c'}$ entspricht dem Abstand der beiden Transportpositionen $\delta_a$, $\delta_c$, in denen mittels des ersten Roboters die Positionen $p_{1,1}(\delta_a)$, $p_{1,2}(\delta_a)$ und $p_{1,3}(\delta_a)$ und mittels des ausgetauschten zweiten Roboters die Positionen $p_{1,1}(\delta_c)$ und $p_{1,2}(\delta_c)$ oder $p_{1,3}(\delta_c)$ ermittelt wurden ($\delta_{c'} - \delta_{a'} = \delta_c - \delta_a$), so dass die Verschiebung der beiden fördermittelbasisfesten Koordinatensystemen des ursprünglichen und des ausgetauschten Roboters zum fördermittelbasisfesten Koordinatensystem des ersten Roboters gleich bleibt. Hierzu wurden die ursprünglichen Transportpositionen in einer Ausführung abgespeichert.

Die Steuerung 11 ermittelt auf Basis der Positionen $p_{1,1}(\delta_{a'})$, $p_{1,2}(\delta_{a'})$ und $p_{1,3}(\delta_{a'})$ in vorstehend erläuterter Weise ein bauteilfestes Koordinatensystem $W1'1$, auf dessen Basis eine Transformation $T_{C1,W1'1}$ zwischen diesem bauteilfesten Koordinatensystem $W1'1$ und dem fördermittelbasisfesten Koordinatensystem $C1$ des ersten Roboters, und übermittelt diese Transformation $T_{C1,W1'1}$ (bzw. ihre Parameter) an die Steuerung des neuen, dritten Roboters. Diese ermittelt auf Basis der Positionen $p_{1,1}(\delta_{c'})$, $p_{1,2}(\delta_c)$ und $p_{1,3}(\delta_{c'})$ in vorstehend erläuterter Weise ein bauteilfestes Koordinatensystem $W1'2$, hieraus die Transformation $T_{R2',W1'2}$ zwischen dem bauteilfesten Koordinatensystem $W1'2$ und dem Koordinatensystem $R2'$ des neuen Roboters, und daraus die Transformation $T_{R2',C2'}$ zwischen einem roboterfesten Koordinatensystem $R2'$ und dem entsprechenden fördermittelbasisfesten Koordinatensystem $C2$ des neuen Roboters, beispielsweise gemäß $T_{R2',C2} = (T_{C1,W1'1})^{-1}T_{R2',W1'2'}$, sofern die Koordinatensysteme $C1$, $C2$ übereinstimmen.

Man erkennt, dass vorteilhaft bei Austausch eines Roboters nur dessen fördermittelbasisfestes Koordinatensystem in einfacher Weise neu eingemessen wird.

Wird die Kamera 40 ausgetauscht, entspricht dies einer Modifikation des Transportpositionsermittelungsmittels, da durch die ausgetauschte Kamera eine andere Synchronisierungsposition definiert ist.

Daher werden in einem solchen Fall in analoger, vorstehend mit Bezug auf Fig. 2, 4 erläuter Weise mittels des ersten Roboters die Positionen $p_{1,1}(\delta_a)$, $p_{1,2}(\delta_a)$ und $p_{1,3}(\delta_a)$ sowie $p_{2,1}(\delta_{a''})$, $p_{2,2}(\delta_{a''})$ und $p_{2,3}(\delta_{a''})$ der Kalibrierplatten W1, W2 bzw. eines ersten bzw. zweiten Bauteils erneut ermittelt.

In analoger, vorstehend mit Bezug auf $W11$, $W12$ und Fig. 4 erläuterten Weise kann auch für den zweiten Roboter jeweils eine Transformation $T_{C2,W'12}$, $T_{C2,W'22}$ zwischen einem bauteilfesten Koordinatensystem der Kalibrierplatte W1 bzw. W2 und dem fördermittelbasisfesten Koordinatensystem $C2$ des zweiten Roboters auf Basis der neuen Synchronisierungsposition ermittelt werden.

Hierzu kann insbesondere zunächst die Steuerung 11 analog vorstehend erläuterter Weise für jede Kalibrierplatte jeweils die Transformation $T_{W11,W'11}$ bzw. $T_{W21,W'21}$ zwischen den beiden bauteilfesten Koordinatensystemen und des ersten Roboters für die alte und neue Synchronisierungsposition ermitteln: $T_{W11,W'11} = T_{C1,W'11}(T_{C1,W11})^{-1}$ bzw. $T_{W12,W'12} = T_{C1,W'12}(T_{C1,W12})^{-1}$. Diese kann die Steuerung 11 an die Steuerung 21 übermitteln, die hieraus und der bereits ermittelten Transformation $T_{C2, W12}$ bzw. $T_{C2, W22}$ in einfacher Weise die Transformationen $T_{C2, W'12}$, $T_{C2, W'22}$ ermitteln kann: $T_{C2, W'12} = T_{W11, W'11} \, T_{C2, W12}$ bzw. $T_{C2, W'22} = T_{W21, W'21} \, T_{C2, W22}$. Gleichermaßen kann die Steuerung 11 auch die Transformationen $T_{C1,W'11}$, $T_{C1,W'21}$ an die Steuerung 21 übermitteln.

Man erkennt, dass vorteilhaft bei Modifikation des Transportpositionsermittelungsmittels nur die bauteilfesten Koordinatensysteme des ersten Roboters neu eingemessen werden.

Obwohl in der vorhergehenden Beschreibung exemplarische Ausführungen erläutert wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen ergibt.

Bezugszeichenliste

| | |
|---|---|
| 10 | erster Roboter |
| 11 | Robotersteuerung des ersten Roboter |
| 20 | zweiter Roboter |
| 21 | Robotersteuerung zweiter Roboter |
| 30 | Förderband |
| 40 | Transportpositionsermittelungsmittel (Kamera, Drehgeber) |
| $P_{i,j}$ | Messpunkt j des Kalibrierkörpers Wi |
| $Wi$ | Kalibrierplatte (Bauteil) |
| $\delta_{(a, a', a'', b, c, c', d)}$ | Transportposition(en) |
| $T_{Ri, Ci}$ | Transformation zwischen roboter- und fördermittelbasisfestem Koordinatensystem des i. Roboters |
| $T_{Ci, Wji}$ | Transformation zwischen fördermittelbasis- und bauteilfestem Koordinatensystem des Bauteils j und des i. Roboters |

**Patentansprüche**

1. Verfahren zum Kalibrieren eines Systems mit einem Fördermittel (30) und einem ersten Roboter (10), mit den Schritten:

   (a) Ermitteln der Positionen von wenigstens drei Messpunkten ($P_{1, 1}$, $P_{1, 2}$, $P_{1, 3}$) eines durch das Fördermittel transportierten ersten Messpunktsystems (W1) in einer ersten Transportposition ($\delta_a$) mittels des ersten Roboters (10);

   (b) Ermitteln der Position von wenigstens einem dieser Messpunkte ($P_{1, 1}$) in einer zweiten Transportposition ($\delta_b$) mittels des ersten Roboters (10);

   (c) Ermitteln der Transportpositionen ($\delta_a$, $\delta_b$, $\delta_c$, $\delta_d$) auf Basis einer erfassten Bewegung des Fördermittels relativ zu einer Synchronisierungsposition mittels eines Transportpositionsermittelungsmittels (40); und

   (d) Kalibrieren des Transportpositionsermittelungsmittels (40) auf Basis der mittels des ersten Roboters ermittelten Positionen der Messpunkte in der ersten und in der zweiten Transportposition.

2. Verfahren nach Anspruch 1, mit dem Schritt:
   Ermitteln einer Transformation ($T_{R1,C1}$) zwischen einem fördermittelbasisfesten Koordinatensystem (C1) und einem roboterfesten Koordinatensystem (R1) des ersten Roboters (10) und/oder einer Transformation ($T_{C1,W11}$) zwischen einem messpunktsystemfesten Koordinatensystem (W11) des ersten Messpunktsystems und einem fördermittelbasisfesten Koordinatensystem (C1) des ersten Roboters (10) auf Basis der wenigstens vier mittels des ersten Roboters (10) ermittelten Positionen der Messpunkte ($P_{1, 1}$, $P_{1, 2}$, $P_{1, 3}$).

3. Verfahren nach Anspruch 1 oder 2, mit dem Schritt:
   Ermitteln der Positionen von wenigstens zwei Messpunkten ($P_{1, 1}$, $P_{1, 2/3}$) des ersten Messpunktsystems (W1) in einer dritten Transportposition ($\delta_c$, $\delta_{c'}$) und der Position von wenigstens einem weiteren Messpunkt ($P_{1, 3/2}$) in der dritten Transportposition ($\delta_c$, $\delta_{c'}$) oder von wenigstens einem der drei Messpunkte ($P_{1, 1}$) in einer vierten Transportposition ($\delta_d$) mittels eines zweiten Roboters (20) des Systems.

**4.** Verfahren nach Anspruch 3, mit dem Schritt:
Ermitteln einer Transformation ($T_{R2,C2}$) zwischen einem roboterfesten Koordinatensystem (R2) und einem fördermittelbasisfesten Koordinatensystem (C2) des zweiten Roboters (20) auf Basis der wenigstens drei mittels des zweiten Roboters ermittelten Positionen.

**5.** Verfahren nach einem der vorhergehenden Ansprüche 3 oder 4, mit dem Schritt: Ermitteln einer Transformation ($T_{C2,W12}$) zwischen einem messpunktsystemfesten Koordinatensystem (W12) eines durch das Fördermittel (30) transportierten zweiten Messpunktsystems (W1, W2) und einem fördermittelbasisfesten Koordinatensystem (C2) des zweiten Roboters (20) auf Basis einer Transformation($T_{C1,W11}$) zwischen dem messpunktsystemfesten ersten Koordinatensystem (W11) des ersten Messpunktsystems (W1) und einem fördermittelbasisfesten Koordinatensystem (C1) des ersten Roboters (10) oder einem messpunktsystemfesten zweiten Koordinatensystem (W12) des zweiten Messpunktsystems (W2).

**6.** Verfahren nach einem der vorhergehenden Ansprüche 3 bis 5, mit den Schritten:

Ermitteln wenigstens eines messpunktsystemfesten Koordinatensystems (W11, W12) eines Messpunktsystems (W1, W2); und
Ermitteln einer Transformation($T_{C2,W12}$) zwischen dem messpunktsystemfesten Koordinatensystem (W11, W12) des jeweiligen Messpunktsystems (W1, W2) und
einem fördermittelbasisfesten Koordinatensystem (C2) des zweiten Roboters (20) auf Basis dieses messpunktsystemfesten Koordinatensystems (W11, W12) des jeweiligen Messpunktsystems (W1, W2).

**7.** Verfahren nach einem der vorhergehenden Ansprüche 3 bis 6, mit den Schritten:

Austauschen des zweiten Roboters (20) durch einen dritten Roboter;
Ermitteln einer Transformation ($T_{C1,W11}$) zwischen einem messpunktsystemfesten Koordinatensystem (W11) eines durch das Fördermittel (30) transportierten ersten Messpunktsystems (W1) und einem fördermittelbasisfesten Koordinatensystem (C1) des ersten Roboters (10); und
Ermitteln einer Transformation zwischen einem fördermittelbasisfesten Koordinatensystem und einem roboterfesten Koordinatensystem des dritten Roboters auf Basis der Transformation ($T_{C1,W11}$) zwischen dem messpunktsystemfesten Koordinatensystem (W11) und dem fördermittelbasisfesten Koordinatensystem (C1) des ersten Roboters.

**8.** Verfahren nach einem der vorhergehenden Ansprüche, wobei die Synchronisierungsposition auf Basis einer Erfassung des entsprechenden durch das Fördermittel transportierten Messpunktsystems (W1) ermittelt wird.

**9.** Verfahren nach einem der vorhergehenden Ansprüche, wobei wenigstens eines der Messpunktsysteme (W1, W2) eine fest mit dem Fördermittel (30) verbundene, insbesondere integral mit dem Fördermittel (30) ausgebildete, Messpunktanordnung mit an dem Fördermittel (30) angeordneten Messpunkten oder ein Kalibrierbauteil (W1, W2) ist, deren bzw. dessen Messpunkte ($P_{1,1}, P_{1,2}, P_{1,3}; P_{2,1}, P_{2,2}, P_{2,3}$) geometrisch und/oder optisch definiert sind, und/oder deren bzw. dessen Orientierung und Position quer zur Transportrichtung des Fördermittels (30) einem durch das Fördermittel zu transportierenden und mittels Robotern des Systems handzuhabenden und/oder zu bearbeitenden Bauteil entspricht.

**10.** System zum Handhaben und/oder Bearbeiten von durch ein Fördermittel (30) des Systems transportierten Bauteilen (W1, W2) durch Roboter (10, 20) des Systems, aufweisend ein Transportpositionsermittelungsmittel (40), ein Fördermittel (30), einen ersten, zweiten und/oder dritten Roboter (10, 20) und eine Steuerung (11, 21), die zur Durchführung eines Verfahrens nach einem der vorhergehenden Ansprüche eingerichtet ist.

**11.** Computerprogrammprodukt mit einem Programmcode umfassend Befehle, der auf einem von einem Computer lesbaren Medium gespeichert ist, wobei die Befehle bei Ausführung des Programms durch einen Computer, diesen veranlassen, das Verfahrens nach einem der vorhergehenden Ansprüche 1 bis 9 auszuführen.

**Claims**

**1.** A method of calibrating a system comprising a conveying means (30) and a first robot (10), wherein the method comprises the steps of:

(a) determining, by means of the first robot (10), the positions of at least three measuring points ($P_{1, 1}$, $P_{1, 2}$, $P_{1, 3}$) of a first measuring point system (W1) transported by the conveying means, in a first transport position ($\delta_a$);

(b) determining, by means of the first robot (10), the position of at least one of these measuring points ($P_{1, 1}$), in a second transport position ($\delta_b$);

(c) determining, by means of a transport position determining means (40), the transport positions ($\delta_a$, $\delta_b$, $\delta_d$, $\delta_d$) on the basis of a detected movement of the conveying means relative to a synchronisation position; and

(d) calibrating the transport position determining means (40) on the basis of the positions of the measuring points, determined by means of the first robot, in the first transport position and in the second transport position.

2.  The method according to claim 1, comprising the step of:
    determining a transformation ($T_{R1, C1}$) between a coordinate system (C1), which coordinate system (C1) is fixed with respect to the base of the conveying means, and a coordinate system (R1) of the first robot (10), which coordinate system (R1) of the first robot (10) is fixed with respect to the robot, and / or a transformation ($T_{C1, W11}$) between a coordinate system (W11) of the first measuring point system, which coordinate system (W11) of the first measuring point system is fixed with respect to the measuring point system, and a coordinate system (C1) of the first robot (10), which coordinate system (C1) of the first robot (10) is fixed with respect to the base of the conveying means, on the basis of the at least four positions of the measuring points ($P_{1, 1}$, $P_{1, 2}$, $P_{1, 3}$) which have been determined by means of the first robot (10).

3.  The method according to claim 1 or 2, comprising the step of:
    determining the positions of at least two measuring points ($P_{1, 1}$, $P_{1, 2/3}$) of the first measuring point system (W1) in a third transport position ($\delta_c$, $\delta_{c'}$) and the position of at least one further measuring point ($P_{1, 3/2}$) in the third transport position ($\delta_c$, $\delta_{c'}$) or of at least one of the three measuring points ($P_{1, 1}$) in a fourth transport position ($\delta_d$) by means of a second robot (20) of the system.

4.  The method according to claim 3, comprising the step of:
    determining a transformation ($T_{R2, C2}$) between a coordinate system (R2), which coordinate system (R2) is fixed with respect to the robot, and a coordinate system (C2) of the second robot (20), which coordinate system (C2) of the second robot (20) is fixed with respect to the base of the conveying means, on the basis of the at least three positions which have been determined by means of the second robot.

5.  The method according to any one of the preceding claims 3 or 4, comprising the step of:
    determining a transformation ($T_{C2, W12}$) between a coordinate system (W12) of a second measuring point system (W1, W2) transported by the conveying means (30), which coordinate system (W12) of the second measuring point system (W1, W2) is fixed with respect to the measuring point system, and a coordinate system (C2) of the second robot (20), which coordinate system (C2) of the second robot (20) is fixed with respect to the base of the conveying means, on the basis of a transformation ($T_{C1, W11}$) between the first coordinate system (W11) of the first measuring point system (W1), which first coordinate system (W11) of the first measuring point system (W1) is fixed with respect to the measuring point system, and a coordinate system (C1) of the first robot (10), which coordinate system (C1) of the first robot (10) is fixed with respect to the base of the conveying means, or a second coordinate system (W12) of the second measuring point system (W2), which second coordinate system (W12) of the second measuring point system (W2) is fixed with respect to the measuring point system.

6.  The method according to any one of the preceding claims 3 to 5, comprising the steps of:

    determining at least one coordinate system (W11, W12) of a measuring point system (W1, W2), which at least one coordinate system (W11, W12) is fixed with respect to the measuring point system; and
    determining a transformation ($T_{C2, W12}$) between the coordinate system (W11, W12) of the respective measuring point system (W1, W2), which coordinate system (W11, W12) of the respective measuring point system (W1, W2) is fixed with respect to the measuring point system, and a coordinate system (C2) of the second robot (20), which coordinate system (C2) of the second robot (20) is fixed with respect to the base of the conveying means, on the basis of this coordinate system (W11, W12) of the respective measuring point system (W1, W2), which coordinate system (W11, W12) of the respective measuring point system (W1, W2) is fixed with respect to the measuring point system.

7.  The method according to any one of the preceding claims 3 to 6, comprising the steps of:

    replacing the second robot (20) with a third robot;

determining a transformation ($T_{C1,\ W11}$) between a coordinate system (W11) of a first measuring point system (W1) transported by the conveying means (30), which coordinate system (W11) of the first measuring point system (W1) is fixed with respect to the measuring point system, and a coordinate system (C1) of the first robot (10), which coordinate system (C1) of the first robot (10) is fixed with respect to the base of the conveying means; and

determining a transformation between a coordinate system, which coordinate system is fixed with respect to the base of the conveying means, and a coordinate system of the third robot, which coordinate system of the third robot is fixed with respect to the robot, on the basis of the transformation ($T_{C1,\ W11}$) between the coordinate system (W11), which coordinate system (W11) is fixed with respect to the measuring point system, and the coordinate system (C1) of the first robot, which coordinate system (C1) of the first robot is fixed with respect to the base of the conveying means.

8. The method according to any one of the preceding claims, wherein the synchronisation position is determined on the basis of a detection of the corresponding measuring point system (W1) transported by the conveying means.

9. The method according to any one of the preceding claims, wherein at least one of the measuring point systems (W1, W2) is a measuring point arrangement which is fixedly connected to the conveying means (30), in particular a measuring point arrangement which is integrally formed with the conveying means (30), and which has measuring points which are arranged on the conveying means (30), or is a calibration component (W1, W2), the measuring points ($P_{1,1}$, $P_{1,2}$, $P_{1,3}$; $P_{2,1}$, $P_{2,2}$, $P_{2,3}$) of which are geometrically and / or optically defined, and / or the orientation and position of which, transverse to the transport direction of the conveying means (30), corresponds to a component which is to be transported by the conveying means and which is to be handled and / or processed by means of robots of the system.

10. A system for handling and / or processing, by robots (10, 20) of the system, components (W1, W2) transported by a conveying means (30) of the system, wherein the system comprises a transport position determining means (40), a conveying means (30), a first, second and / or third robot (10, 20) and a control unit (11, 21), which are arranged to carry out the method according to any one of the preceding claims.

11. A computer program product comprising a program code which comprises instructions which are stored on a computer readable medium, wherein the instructions, when the program is being executed on a computer, cause the computer to carry out the method according to any one of the preceding claims 1 to 9.

## Revendications

1. Procédé d'étalonnage d'un système avec un moyen de transport (30) et un premier robot (10), avec les étapes suivantes :

   (a) la détermination des positions d'au moins trois points de mesure ($P_{1,1}$, $P_{1,2}$, $P_{1,3}$) d'un premier système de point de mesure (W1) transporté par le moyen de transport dans une première position de transport ($\delta_a$) à l'aide du premier robot (10) ;
   (b) la détermination de la position d'au moins un de ces points de mesure ($P_{1,1}$) dans une deuxième position de transport ($\delta_b$) à l'aide du premier robot (10) ;
   (c) la détermination des positions de transport ($\delta_a$, $\delta_b$, $\delta_c$, $\delta_d$) sur la base d'un déplacement détecté du moyen de transport par rapport à une position de synchronisation à l'aide d'un moyen de détermination de position de transport (40) ; et
   (d) l'étalonnage du moyen de détermination de position de transport (40) sur la base des positions déterminées à l'aide du premier robot des points de mesure dans la première et dans la deuxième position de transport.

2. Procédé selon la revendication 1, avec l'étape suivante :
   la détermination d'une transformation ($T_{R1,\ C1}$) entre un système de coordonnées (C1) fixé à la base de moyen de transport et un système de coordonnées (R1) fixé à un robot du premier robot (10) et/ou une transformation ($T_{C1,\ W11}$) entre un système de coordonnées (W11) fixé au système de point de mesure du premier système de point de mesure et un système de coordonnées (C1) fixé à la base de moyen de transport du premier robot (10) sur la base des au moins quatre positions déterminées à l'aide du premier robot (10) des points de mesure ($P_{1,1}$, $P_{1,2}$, $P_{1,3}$).

3. Procédé selon la revendication 1 ou 2, avec l'étape suivante :

la détermination des positions d'au moins deux points de mesure ($P_{1.1}$, $P_{1,2/3}$) du premier système de point de mesure (W1) dans une troisième position de transport ($\delta_c$, $\delta_{c'}$) et la position d'au moins un autre point de mesure ($P_{1,\,3/2}$) dans la troisième position de transport ($\delta_c$, $\delta_{c'}$) ou d'au moins un des trois points de mesure ($P_{1.1}$) dans une quatrième position de transport ($\delta a$) à l'aide d'un deuxième robot (20) du système.

**4.** Procédé selon la revendication 3, avec l'étape suivante :
la détermination d'une transformation ($T_{R2,\,C2}$) entre un système de coordonnées (R2) fixé à un robot et un système de coordonnées (C2) fixe à la base de moyen de transport du deuxième robot (20) sur la base des au moins trois positions déterminées à l'aide du deuxième robot.

**5.** Procédé selon l'une des revendications précédentes 3 ou 4, avec l'étape suivante :
la détermination d'une transformation ($T_{C2,\,W12}$) entre un système de coordonnées (W12) fixé au système de point de mesure d'un second système de point de mesure (W1, W2) transporté par le moyen de transport (30) et un système de coordonnées (C2) fixé à la base de moyen de transport du deuxième robot (20) sur la base d'une transformation ($T_{C1,\,W11}$) entre le premier système de coordonnées (W11) fixé au système de point de mesure du premier système de robot de mesure (W1) et un système de coordonnées (C1) fixé à la base de moyen de transport du premier robot (10) ou un second système de coordonnées (W12) fixé au système de point de mesure du second système de point de mesure (W2).

**6.** Procédé selon l'une des revendications précédentes 3 à 5, avec les étapes suivantes :

la détermination au moins d'un système de coordonnées (W11, W12) fixé au système de point de mesure d'un système de point de mesure (W1, W2) ; et
la détermination d'une transformation ($T_{C2,\,W12}$) entre le système de coordonnées (W11, W12) fixé au système de point de mesure du système de point de mesure (W1, W2) respectif et un système de coordonnées (C2) fixé à la base de moyen de transport du deuxième robot (20) sur la base de ce système de coordonnées (W11, W12) fixé au système de point de mesure du système de point de mesure (W1, W2) respectif.

**7.** Procédé selon l'une des revendications précédentes 3 à 6, avec les étapes suivantes :

le remplacement du deuxième robot (20) par un troisième robot ;
la détermination d'une transformation ($T_{C1,\,W11}$) entre un système de coordonnées (W11) fixé au système de point de mesure d'un premier système de point de mesure (W1) transporté par le moyen de transport (30) et un système de coordonnées (C1) fixé à la base de moyen de transport du premier robot (10) ; et
la détermination d'une transformation entre un système de coordonnées fixé à la base de moyen de transport et un système de coordonnées fixé à un robot du troisième robot sur la base de la transformation ($T_{C1,\,W11}$) entre le système de coordonnées (W11) fixé au système de point de mesure et le système de coordonnées (C1) fixé à la base de moyen de transport du premier robot.

**8.** Procédé selon l'une des revendications précédentes, dans lequel la position de synchronisation est déterminée sur la base d'une détection du système de point de mesure (W1) correspondant transporté par le moyen de transport.

**9.** Procédé selon l'une des revendications précédentes, dans lequel au moins un des systèmes de point de mesure (W1, W2) est un agencement de point de mesure relié fixement au moyen de transport (30), réalisé en particulier d'un seul tenant avec le moyen de transport (30) avec des points de mesure agencés au niveau du moyen de transport (30) ou un composant d'étalonnage (W1, W2), dont les points de mesure ($P_{1,\,1}$, $P_{1,2}$, $P_{1,3}$, $P_{2,1}$, $P_{2,2}$, $P_{2,3}$) sont définis géométriquement et/ou optiquement, et/ou dont l'orientation et la position transversalement au sens de transport du moyen de transport (30) correspond à un composant à transporter par le moyen de transport et à manipuler et/ou à usiner à l'aide de robots du système.

**10.** Système de manipulation et/ou d'usinage de composants (W1, W2) transportés par un moyen de transport (30) du système par des robots (10, 20) du système, présentant un moyen de détermination de position de transport (40), un moyen de transport (30), un premier, deuxième et/ou troisième robots (10, 20) et une commande (11, 21) qui est conçue pour l'exécution d'un procédé selon l'une des revendications précédentes.

**11.** Produit de programme informatique avec un code de programme comprenant des ordres qui est enregistré sur un support lisible par un ordinateur, dans lequel lors de la réalisation du programme par un ordinateur, les ordres incitent celui-ci à réaliser le procédé selon l'une des revendications précédentes 1 à 9.

# Fig. 1

1

# Fig. 2

# Fig. 3

3

$x_{C1.}$

$\bullet \; P_{1,2}$

$\bullet \; P_{1,3}$

$P_{1,1}$

$y_{C1.}$

$\underline{W1}^{(1)}$

$x_{R1}$

$y_{R1}$

$\underline{20}$

$\underline{21}$

$\underline{10}$

$\underline{11}$

$T_{R1, C1}$

$T_{C1, W11}$

$\delta_b$

$x_{W11}$

$\underline{40}$

$y_{W11}$

$\underline{30}$

# Fig. 4

4

**IN DER BESCHREIBUNG AUFGEFÜHRTE DOKUMENTE**

**In der Beschreibung aufgeführte Patentdokumente**

- DE 10162967 B4
- DE 102013113165 A1
- US 2011022216 A1
- EP 1375083 A2
- DE 10150225 A1
- US 2012229620 A1

**In der Beschreibung aufgeführte Nicht-Patentliteratur**

- **R E DEAKIN.** *3D COORDINATE Transformations*